# EUROPÄISCHE PATENTSCHRIFT

(11) **EP 3 486 481 B1**
(45) Veröffentlichungstag und Bekanntmachung des Hinweises auf die Patenterteilung: **21.10.2020**
(21) Anmeldenummer: 18206114.3
(22) Anmeldetag: 14.11.2018
(51) Int. Cl.: F03D 80/40

(54) **VERFAHREN UND SYSTEM ZUM ERKENNEN EINES VEREISUNGSZUSTANDS EINER WINDENERGIEANLAGE**
METHOD AND SYSTEM FOR DETECTING AN ICING CONDITION OF A WIND TURBINE
PROCÉDÉ ET SYSTÈME DE RECONNAISSANCE D'UN ÉTAT DE GIVRAGE D'UNE ÉOLIENNE

(30) Priorität: 16.11.2017 DE 102017010609
(43) Veröffentlichungstag der Anmeldung: 22.05.2019
(73) Patentinhaber: Senvion GmbH, 22297 Hamburg (DE)
(72) Erfinder: Hansen, Marco, 25774 Groven (DE)
(74) Vertreter: Glawe, Delfs, Moll

(56) Entgegenhaltungen:
- EP-A1- 2 154 364
- EP-A1- 3 165 766
- EP-A2- 1 936 184
- US-A1- 2012 226 485

## Beschreibung

Die Erfindung betrifft ein Verfahren und ein System zum Erkennen eines Vereisungszustands einer Windenergieanlage.

Windenergieanlagen können bei bestimmten Wetterbedingungen einer Vereisung ausgesetzt sein. Das Eis kann sich beispielsweise auf den Rotorblättern festsetzen. Daraus kann sich eine Gefahr für die Umgebung ergeben, wenn Eisstücke sich von dem Rotorblatt lösen und weggeschleudert werden. Da die Bahngeschwindigkeit insbesondere im äußeren Bereich eines Rotorblatts hoch sein kann, können solche Eisstücke eine beträchtliche Strecke fliegen, bevor sie auf dem Boden aufschlagen.

Es ist heute üblich, Windenergieanlagen außer Betrieb zu setzen, wenn die Gefahr einer Vereisung besteht. Von einem stillstehenden oder sehr langsam drehenden Rotor geht keine Gefahr aus.

Ob ein Risiko von Eisansatz besteht, hängt von verschiedenen Bedingungen ab, wie etwa der Temperatur, der Luftfeuchtigkeit und der Windgeschwindigkeit. Da nicht alle diese Bedingungen sich ohne weiteres exakt messen lassen, kann aus indirekten Indikatoren auf die Gefahr von Eisansatz geschlossen werden. Steht beispielsweise ein Anemometer still, obwohl keine Windstille ist, so kann angenommen werden, dass das Anemometer sich aufgrund von Vereisung nicht dreht. Dokument EP 2 154 364 A1 stellt einen Generator für eine Windenergieanlage vor, wobei die Daten zweier Anemometer verglichen werden können und wobei ein Kühlabluftauslass einer Gondel auf ein Anemometer gerichtet werden kann, um Eis und Schnee an dem Anemometer entgegenzuwirken. Aus einem Vereisungszustand des Anemometers kann auf einen Vereisungszustand der Windenergieanlage insgesamt geschlossen werden. Im Betrieb hat sich gezeigt, dass dieser Indikator nicht immer zuverlässig ist. Gelegentlich wird aus dem Stillstand eines Anemometers auf einen Vereisungszustand geschlossen, obwohl tatsächlich kein Vereisungszustand vorliegt.

Der Erfindung liegt die Aufgabe zugrunde, ein Verfahren und ein System zum Erkennen eines Vereisungszustands einer Windenergieanlage vorzustellen, die eine verminderte Fehleranfälligkeit haben. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird ein Systemzustand der Windenergieanlage identifiziert, in dem ein erstes Anemometer der Windenergieanlage stillsteht und in dem die Drehzahl eines Rotor unterhalb eines vorgegebenen ersten Drehzahl-Schwellwerts liegt. Der Rotor wird auf eine Drehzahl oberhalb des ersten Drehzahl-Schwellwerts beschleunigt. Der Zustand des ersten Anemometers wird geprüft, wobei ein Vereisungssignal erzeugt wird, wenn das erste Anemometer stillsteht.

Die Erfindung hat erkannt, dass der Stillstand eines Anemometers gelegentlich dadurch verursacht wird, dass das Anemometer in den Windschatten eines Rotorblatts gerät. Würde man alleine aus dem Stillstand des Anemometers auf einen Vereisungszustand der Windenergieanlage schließen, so würde die Windenergieanlage außer Betrieb gesetzt, obwohl tatsächlich gar kein Vereisungszustand vorliegt.

Mit der Erfindung wird deswegen ein zweistufiges Verfahren zum Erkennen eines Vereisungszustands vorgeschlagen. Der Stillstand des ersten Anemometers bei stillstehendem oder sehr langsam drehendem Rotor wird weiterhin als ein erster Indikator für einen Vereisungszustand verwendet. Anstatt die Windenergieanlage nun direkt außer Betrieb zu setzen, wird der Indikator in einer zweiten Stufe des erfindungsgemäßen Verfahrens verifiziert. Dazu wird der Rotor beschleunigt, sodass er sich mit einer Drehzahl oberhalb des ersten Drehzahl-Schwellwerts dreht. Nur wenn das erste Anemometer auch bei der erhöhten Rotordrehzahl stillsteht, wird ein Vereisungszustand angenommen und ein Vereisungssignal erzeugt.

Das Vereisungssignal kann zu einer Steuerung der Windenergieanlage geleitet werden. Die Steuerung kann das Vereisungssignal verarbeiten, um die Windenergieanlage in einen Zustand zu versetzen oder in einem Zustand zu halten, in dem die Windenergieanlage nicht in Betrieb ist. Nicht in Betrieb bedeutet, dass die Windenergieanlage keine elektrische Energie erzeugt. Beispielsweise kann die Windenergieanlage in einen Zustand versetzt werden, in dem der Rotor sich nur langsam oder gar nicht dreht. Insbesondere kann die Windenergieanlage in einen Zustand versetzt werden, in dem der Rotor mit einer Drehzahl unterhalb des ersten Drehzahl-Schwellwerts rotiert.

Wenn kein Vereisungssignal erzeugt wird, kann die Windenergieanlage in den Normalbetrieb übergehen bzw. den Normalbetrieb beibehalten. Dies kann beispielsweise bedeuten, dass die Steuerung der Windenergieanlage einen Versuch unternimmt, die Windenergieanlage hochzufahren. Dabei kann der Rotor weiter beschleunigt werden und eine Verbindung mit einem Anschlussnetz hergestellt werden, sobald der Rotor eine Mindest-Betriebsdrehzahl erreicht hat.

Eine notwendige Bedingung für das Auftreten eines Vereisungszustands ist eine niedrige Temperatur. Es gibt eine Temperaturschwelle, oberhalb derer ein Eisansatz unabhängig von allen sonstigen Bedingungen ausgeschlossen ist. Das erfindungsgemäße Verfahren kann deswegen so durchgeführt werden, dass ein Systemzustand identifiziert wird, in dem das erste Anemometer der Windenergieanlage stillsteht, der Rotor mit einer Drehzahl unterhalb des vorgegebenen ersten Drehzahl-Schwellwerts dreht und außerdem die Lufttemperatur unterhalb eines vorgegebenen Temperatur-Schwellwerts ist. Der Temperatur-Schwellwert kann so gewählt sein, dass oberhalb des Temperatur-Schwellwerts keine Vereisungsgefahr besteht.

Das Verfahren kann so durchgeführt werden, dass der Zustand des ersten Anemometers überprüft wird, unmittelbar nach dem der Beschleunigungsvorgang des Rotors abgeschlossen ist. Um das Risiko einer irrtümlichen Annahme eines Vereisungszustands zu vermindern, kann das Verfahren in einer alternativen Ausführungsform so durchgeführt werden, dass der Rotor nach Abschluss des Beschleunigungsvorgangs für eine vorgegebene Zeitspanne auf einer Drehzahl oberhalb des Drehzahl-Schwellwerts gehalten wird, bevor der Zustand des ersten Anemometers geprüft wird. Nur wenn das erste Anemometer nach Ablauf der Zeitspanne stillsteht, wird ein Vereisungssignal erzeugt.

Um das Risiko einer irrtümlichen Annahme eines Vereisungszustands zu vermindern, kann es ferner von Vorteil sein, wenn der Rotor auf eine Drehzahl beschleunigt wird, die oberhalb eines zweiten vorgegebenen Drehzahl-Schwellwerts liegt, wobei der zweite vorgegebene Drehzahl-Schwellwert größer ist als der erste vorgegebene Drehzahl-Schwellwert.

Das Verfahren kann so durchgeführt werden, dass mit dem ersten Drehzahl-Schwellwert eine sehr niedrige Rotordrehzahl definiert wird. Der erste Drehzahl-Schwellwert kann so definiert sein, dass die Rotordrehzahl unterhalb der Drehzahl ist, ab der die Windenergieanlage elektrische Energie produziert und mit dem Anschlussnetz verbunden wird. Unterhalb des ersten Drehzahl-Schwellwerts kann die Windenergieanlage in einem Trudelzustand sein, dem der Rotor sich langsam dreht, ohne dass Energie produziert wird. Möglich ist auch, dass der Rotor vollständig stillsteht.

Das erste Anemometer wird bei dem erfindungsgemäßen Verfahren als Sensor geopfert. Wenn das erste Anemometer aufgrund von Eisansatz stillsteht, liefert das erste Anemometer keine Informationen mehr über die Windverhältnisse. Bei dem erfindungsgemäßen Verfahren kann eine von dem ersten Anemometer unabhängige Information über die Windgeschwindigkeit verarbeitet werden. Es kann ein Systemzustand identifiziert werden, in dem das erste Anemometer stillsteht und in dem die Windgeschwindigkeit größer ist als ein vorgegebener Windgeschwindigkeits-Schwellwert, bevor der Rotor auf eine Drehzahl oberhalb des ersten Drehzahl-Schwellwerts beschleunigt wird.

Die von dem ersten Anemometer unabhängige Information über die Windgeschwindigkeit kann beispielsweise gewonnen werden, indem die Windgeschwindigkeit anhand einer auf den Rotor wirkenden Windlast geschätzt wird. Möglich ist auch die Verwendung eines zweiten Anemometers, das auch dann Messwerte über die Windgeschwindigkeit liefert, wenn das erste Anemometer stillsteht. Das zweite Anemometer kann mit einer Heizeinrichtung versehen sein.

Das erfindungsgemäße Verfahren kann so durchgeführt werden, dass die Windenergieanlage nach dem Vereisungssignal so lange außer Betrieb gehalten wird, bis das Vereisungssignal aufgehoben wird. Der Vereisungszustand kann in dieser Phase nach Ablauf vorgegebener zeitlicher Abstände überprüft werden. Dazu kann der Rotor auf eine Drehzahl oberhalb des ersten Drehzahl-Schwellwerts beschleunigt werden und der Zustand des ersten Anemometers geprüft werden. Das Vereisungssignal kann aufrechterhalten werden, wenn das erste Anemometer stillsteht. Das Vereisungssignal kann aufgehoben werden, wenn das erste Anemometer sich dreht.

Die Erfindung betrifft außerdem ein System zum Erkennen eines Vereisungszustands einer Windenergieanlage. Das System umfasst ein Vereisungsmodul und eine Steuereinheit. Das Vereisungsmodul ist dazu ausgelegt, ein Vereisungs-Verdachtssignal zu erzeugen, wenn ein erstes Anemometer der Windenergieanlage stillsteht und die Drehzahl eines Rotors der Windenergieanlage kleiner ist als ein vorgegebener erster Drehzahl-Schwellwert. Die Steuereinheit ist dazu ausgelegt, nach Eingang eine Vereisungs-Verdachtssignals den Rotor auf eine Drehzahl oberhalb des ersten Drehzahl-Schwellwerts zu beschleunigen. Das Vereisungsmodul ist dazu ausgelegt, nach Abschluss des Beschleunigungsvorgangs den Zustand des ersten Anemometers zu überprüfen und ein Vereisungssignal zu erzeugen, wenn das erste Anemometer stillsteht.

Das System kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Systems beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer mit einem erfindungsgemäßen System ausgestatteten Windenergieanlage;
- Fig. 2:: ein Ablaufdiagramm des erfindungsgemäßen Verfahrens.

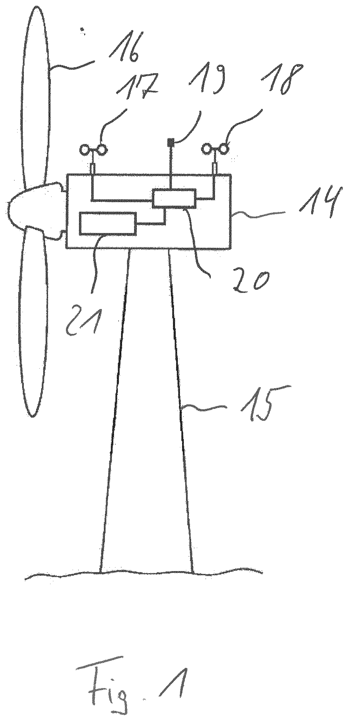

Bei einer in Fig. 1 gezeigten Windenergieanlage ist eine Gondel 14 drehbar auf einem Turm 15 gelagert. Die Gondel 14 trägt einen Rotor 16, der über eine Rotorwelle einen Generator antreibt, um elektrische Energie zu erzeugen. Die elektrische Energie wird über einen Umrichter und einen Transformator in ein Anschlussnetz eingespeist. Die Gondel 14 kann relativ zu dem Turm 15 gedreht werden, um den Rotor 16 in Windrichtung auszurichten.

Auf der Gondel 14 sind ein erstes Anemometer 17, ein zweites Anemometer 18 und ein Temperatursensor 19 angeordnet. Das erste Anemometer 17 ist ein unbeheiztes Anemometer, das zweite Anemometer 18 ist ein beheiztes Anemometer. Ein Vereisungsmodul 20 empfängt Messwerte von den Anemometern 17, 18 und dem Temperatursensor 19. Wenn das Vereisungsmodul 20 einen Systemzustand identifiziert, in dem das zweite Anemometer 18 eine Windgeschwindigkeit meldet, die oberhalb eines vorgegebenen Windgeschwindigkeit-Schwellwerts liegt, während das erste Anemometer 17 stillsteht, während zugleich die Rotordrehzahl unterhalb eines vorgegebenen Drehzahl-Schwellwerts liegt und die Temperatur unterhalb eines vorgegebenen Temperatur-Schwellwerts liegt, so erzeugt das Vereisungsmodul 20 ein Vereisungs-Verdachtssignal und leitet das Vereisungs-Verdachtssignal an eine Steuereinheit 21 der Windenergieanlage.

Die Steuereinheit 21 erzeugt ein Steuersignal, um die Anstellwinkel der Rotorblätter des Rotors 16 zu ändern, sodass der Rotor 16 mehr Energie aus dem Wind aufnimmt und beschleunigt wird. Nach Überschreiten eines vorgegebenen zweiten Drehzahl-Schwellwerts hält die Steuereinheit 21 die Drehzahl des Rotors 16 konstant und teilt dem Vereisungsmodul 20 mit, dass der Beschleunigungsvorgang abgeschlossen ist. Das Vereisungsmodul 20 überprüft, ob das erste Anemometer 17 weiterhin stillsteht. Ist dies der Fall, so sendet das Vereisungsmodul ein Vereisungssignal an die Steuereinheit 21. Die Steuereinheit 21 hält die Windenergieanlage außer Betrieb, was insbesondere bedeutet, dass die Drehzahl des Rotors 16 wieder reduziert wird.

Stellt das Vereisungsmodul 20 fest, dass das Anemometer 17 sich nach Abschluss des Beschleunigungsvorgangs wieder dreht, so liegt kein Vereisungszustand vor. Die Steuereinheit 21 kann in den normalen Betriebszustand übergehen und versuchen, die Windenergieanlage hochzufahren.

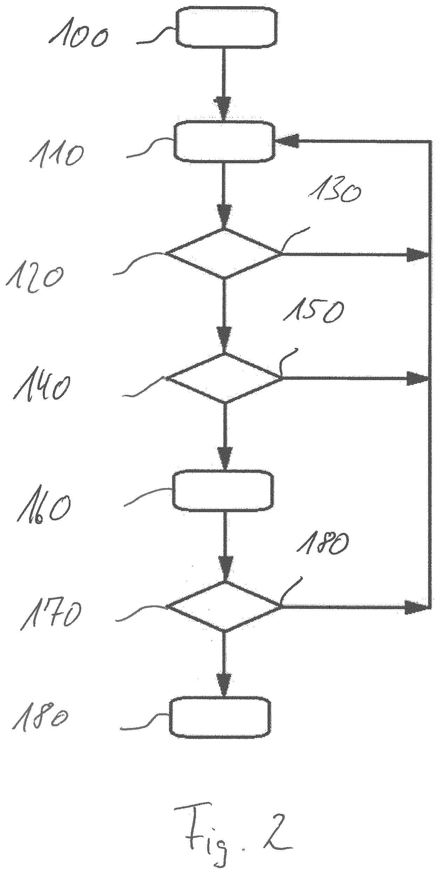

Der Ablauf des erfindungsgemäßen Verfahrens ist in Fig. 2 dargestellt. Nach dem Start des Verfahrens in Schritt 100 ist die Windenergieanlage in Schritt 110 im Normalbetrieb. In Schritt 120 wird überprüft, ob die von dem Temperatursensor 19 gemeldete Temperatur unterhalb eines vorgegebenen Temperatur-Schwellwerts liegt. Ist dies nicht der Fall, verzweigt das Verfahren bei 130, sodass der Normalbetrieb der Windenergieanlage fortgesetzt wird. Liegt die Temperatur unterhalb des Temperatur-Schwellwerts, so wird in Schritt 140 geprüft, ob kumulativ die folgenden Bedingungen vorliegen: 1) die Windgeschwindigkeit liegt oberhalb eines vorgegebenen Windgeschwindigkeit-Schwellwerts; 2) das erste Anemometer 17 steht still; 3) die Drehzahl des Rotors 16 der Windenergieanlage ist kleiner als ein vorgegebener erster Drehzahl-Schwellwert. Ist eine der Bedingungen nicht erfüllt, so verzweigt das Verfahren bei 150 und der Normalbetrieb wird fortgesetzt.

Wird ein Systemzustand festgestellt, in dem alle Bedingungen kumulativ erfüllt sind, so wird in Schritt 160 der Rotor 16 der Windenergieanlage beschleunigt. Nach Abschluss des Beschleunigungsvorgangs wird in Schritt 170 der Zustand des ersten Anemometers 17 überprüft. Stellt sich heraus, dass das zweite Anemometer 17 sich nun dreht, verzweigt das Verfahren bei 180 und der Normalbetrieb der Windenergieanlage wird fortgesetzt. Steht das erste Anemometer 17 weiterhin still, so wird ein Vereisungssignal erzeugt und die Windenergieanlage in Schritt 180 außer Betrieb gesetzt.

Ist die Windenergieanlage wegen Vereisung außer Betrieb, so kann in regelmäßigen Abständen geprüft werden, ob der Vereisungszustand weiterhin besteht. Ist dies nicht der Fall, so kann die Windenergieanlage wieder in den Normalbetrieb übergehen.

## Patentansprüche

1. Verfahren zum Erkennen eines Vereisungszustands einer Windenergieanlage, mit folgenden Schritten:
a. Identifizieren eines Systemzustands der Windenergieanlage, in dem ein erstes Anemometer (17) der Windenergieanlage stillsteht und in dem die Drehzahl eines Rotors (16) der Windenergieanlage kleiner ist als ein vorgegebener erster Drehzahl-Schwellwert;
b. Beschleunigen des Rotors (16) auf eine Drehzahl oberhalb des ersten Drehzahl-Schwellwerts;
c. Prüfen des Zustands des ersten Anemometers (17), wobei ein Vereisungssignal erzeugt wird, wenn das erste Anemometer (17) stillsteht.

2. Verfahren nach Anspruch 1, **dadurch gekennzeichnet, dass** das Vereisungssignal zu einer Steuereinheit (21) der Windenergieanlage geleitet wird, um die Windenergieanlage in einen Zustand zu versetzen oder in einem Zustand zu halten, in dem die Windenergieanlage außer Betrieb ist.

3. Verfahren nach Anspruch 1 oder 2, **dadurch gekennzeichnet, dass** ein Systemzustand identifiziert wird, in dem die Lufttemperatur unterhalb eines vorgegebenen Temperatur-Schwellwerts ist.

4. Verfahren nach einem der Ansprüche 1 bis 3, **dadurch gekennzeichnet, dass** der Rotor (16) nach Abschluss des Beschleunigungsvorgangs für eine vorgegebene Zeitspanne auf einer Drehzahl oberhalb des ersten Drehzahl-Schwellwerts gehalten wird, bevor der Zustand des ersten Anemometers (17) geprüft wird.

5. Verfahren nach einem der Ansprüche 1 bis 4, **dadurch gekennzeichnet, dass** der Rotor (16) auf eine Drehzahl beschleunigt wird, die oberhalb eines zweiten vorgegebenen Drehzahl-Schwellwerts liegt, wobei der zweite vorgegebene Drehzahl-Schwellwert größer ist als der erste vorgegebene Drehzahl-Schwellwert.

6. Verfahren nach einem der Ansprüche 1 bis 5, **dadurch gekennzeichnet, dass** eine von dem ersten Anemometer (17) unabhängige Information über die Windgeschwindigkeit verarbeitet wird.

7. Verfahren nach Anspruch 6, **dadurch gekennzeichnet, dass** die Windgeschwindigkeit mit einem zweiten Anemometer (18) gemessen wird, wobei das zweite Anemometer (18) beheizt ist.

8. Verfahren nach Anspruch 6 oder 7, **dadurch gekennzeichnet, dass** ein Systemzustand identifiziert wird, in dem das erste Anemometer (17) stillsteht und in dem die Windgeschwindigkeit oberhalb eines vorgegebenen Windgeschwindigkeit-Schwellwert liegt.

9. Verfahren nach einem der Ansprüche 1 bis 8, **dadurch gekennzeichnet, dass** nach dem Erzeugen des Vereisungssignals der Vereisungszustand in vorgegebenen zeitlichen Abständen überprüft wird.

10. System zum Erkennen eines Vereisungszustands einer Windenergieanlage mit einem Vereisungsmodul (20) und mit einer Steuereinheit (21), wobei das Vereisungsmodul (20) dazu ausgelegt ist, ein Vereisungs-Verdachtssignal zu erzeugen, wenn ein erstes Anemometer (17) der Windenergieanlage stillsteht und die Drehzahl eines Rotors (16) der Windenergieanlage kleiner ist als ein vorgegebener erster Drehzahl-Schwellwert, bei dem die Steuereinheit (21) dazu ausgelegt ist, nach Eingang eines Vereisungs-Verdachtssignals den Rotor (16) auf eine Drehzahl oberhalb des ersten Drehzahl-Schwellwerts zu beschleunigen, und wobei das Vereisungsmodul (20) dazu ausgelegt ist, nach Abschluss des Beschleunigungsvorgangs den Zustand des ersten Anemometers (17) zu überprüfen und ein Vereisungssignal zu erzeugen, wenn das erste Anemometer (17) stillsteht.

## Claims

1. Method for detecting an icing condition of a wind turbine, comprising the following steps:
a. Identifying a system condition of the wind turbine in which a first anemometer (17) of the wind turbine is stationary and in which the rotational speed of a rotor (16) of the wind turbine is lower than a predefined first rotational speed threshold value;
b. Accelerating the rotor (16) to a rotational speed above the first rotational speed threshold value;
c. Testing the condition of the first anemometer (17), wherein an icing signal is generated if the first anemometer (17) is stationary.

2. Method according to Claim 1, **characterized in that** the icing signal is fed to a control unit (21) of the wind turbine, in order to place the wind turbine in a condition or keep it in a condition in which the wind turbine is out of operation.

3. Method according to Claim 1 or 2, **characterized in that** a system condition is identified in which the air temperature is below a predefined temperature threshold value.

4. Method according to one of Claims 1 to 3, **characterized in that** after the conclusion of the acceleration process the rotor (16) is kept at a rotational speed above the first rotational speed threshold value for a predefined time period before the condition of the first anemometer (17) is tested.

5. Method according to one of Claims 1 to 4, **characterized in that** the rotor (16) is accelerated to a rotational speed which is above a second predefined rotational speed threshold value, wherein the second predefined rotational speed threshold value is higher than the first predefined rotational speed threshold value.

6. Method according to one of Claims 1 to 5, **characterized in that** information about the wind speed, which is independent of the first anemometer (17) is processed.

7. Method according to Claim 6, **characterized in that** the wind speed is measured with a second anemometer (18), wherein the second anemometer (18) is heated.

8. Method according to Claim 6 or 7, **characterized in that** a system condition is identified in which the first anemometer (17) is stationary and in which the wind speed is above a predefined wind speed threshold value.

9. Method according to one of Claims 1 to 8, **characterized in that** after the icing signal has been generated the icing condition is checked at predefined time intervals.

10. System for detecting an icing condition of a wind turbine with an icing module (20) and with a control unit (21), wherein the icing module (20) is configured to generate an icing suspicion signal if a first anemometer (17) of the wind turbine is stationary and the rotation speed of a rotor (16) of the wind turbine is lower than a predefined first rotational speed threshold value at which the control unit (21) is configured to accelerate the rotor (16) to a rotational speed above the first rotational speed threshold value after the inputting of an icing suspicion signal, and wherein the icing module (20) is configured to check the condition of the first anemometer (17) after the conclusion of the acceleration process, and to generate an icing signal if the first anemometer (17) is stationary.

## Revendications

1. Procédé de reconnaissance d'un état de givrage d'une éolienne, comprenant les étapes suivantes :
a. identification d'un état du système de l'éolienne dans lequel un premier anémomètre (17) de l'éolienne est à l'arrêt et dans lequel la vitesse de rotation d'un rotor (16) de l'éolienne est inférieure à une première valeur de seuil de vitesse de rotation prédéterminée ;
b. accélération du rotor (16) à une vitesse de rotation supérieure à la première valeur de seuil de vitesse de rotation ;
c. vérification de l'état du premier anémomètre (17), dans lequel un signal de givrage est généré lorsque le premier anémomètre (17) est à l'arrêt.

2. Procédé selon la revendication 1, **caractérisé en ce que** le signal de givrage est acheminé vers une unité de commande (21) de l'éolienne pour faire passer l'éolienne dans un état ou pour la maintenir dans un état dans lequel l'éolienne est hors service.

3. Procédé selon la revendication 1 ou 2, **caractérisé en ce qu'**un état du système dans lequel la température de l'air est inférieure à un seuil de température prédéterminé est identifié.

4. Procédé selon l'une des revendications 1 à 3, **caractérisé en ce que** le rotor (16) est maintenu à une vitesse de rotation supérieure à la première valeur de seuil de vitesse de rotation pendant une période de temps prédéterminée après la fin du processus d'accélération, avant que l'état du premier anémomètre (17) soit vérifié.

5. Procédé selon l'une des revendications 1 à 4, **caractérisé en ce que** le rotor (16) est accéléré à une vitesse de rotation qui est supérieure à une deuxième valeur de seuil de vitesse de rotation prédéterminée, dans lequel la deuxième valeur de seuil de vitesse de rotation prédéterminée est supérieure à la première valeur de seuil de vitesse de rotation prédéterminée.

6. Procédé selon l'une des revendications 1 à 5, **caractérisé en ce qu'**une information de vitesse du vent indépendante du premier anémomètre (17) est traitée.

7. Procédé selon la revendication 6, **caractérisé en ce que** la vitesse du vent est mesurée au moyen d'un deuxième anémomètre (18), dans lequel le deuxième anémomètre (18) est chauffé.

8. Procédé selon la revendication 6 ou 7, **caractérisé en ce qu'**un état du système dans lequel le premier anémomètre (17) est à l'arrêt et dans lequel la vitesse du vent est supérieure à une valeur de seuil de vitesse du vent prédéterminée est identifié.

9. Procédé selon l'une des revendications 1 à 8, **caractérisé en ce qu'**après que le signal de givrage a été généré, l'état de givrage est vérifié à des intervalles de temps prédéterminés.

10. Système de reconnaissance d'un état de givrage d'une éolienne, comprenant un module de givrage (20) et une unité de commande (21), dans lequel le module de givrage (20) est conçu pour générer un signal de suspicion de givrage lorsqu'un premier anémomètre (17) de l'éolienne est à l'arrêt et que la vitesse de rotation d'un rotor (16) de l'éolienne est inférieure à une première valeur de seuil de vitesse de rotation prédéterminée, dans lequel l'unité de commande (21) est conçue pour accélérer le rotor (16) à une vitesse de rotation supérieure à la première valeur de seuil de vitesse de rotation après réception d'un signal de suspicion de givrage, et dans lequel le module de givrage (20) est conçu pour vérifier l'état du premier anémomètre (17) après la fin du processus d'accélération et pour générer un signal de givrage lorsque le premier anémomètre (17) est à l'arrêt.
